# EUROPEAN PATENT APPLICATION

(11) **EP 4 552 753 A1**
(43) Date of publication of application: **14.05.2025**
(21) Application number: 23937734.4
(22) Date of filing: 12.10.2023
(51) Int. Cl.: B07C 5/342, B25J 11/00, B25J 15/06, B25J 9/16, G06T 7/00, G06N 3/08, G06N 20/00

(54) **WASTE CLASSIFICATION SYSTEM USING AIR DIRECTION CONTROL**

(30) Priority: 27.09.2023 KR 20230129941
(71) Applicant: Aetech Corporation, Seo-gu Incheon 22689 (KR)
(72) Inventor: PARK, Tae Hyung, Gangnam-gu Seoul 06236 (KR); LEE, Do Kyung, Geumcheon-gu Seoul 08520 (KR)
(74) Representative: Jung, Minkyu
(86) International application number: PCT/KR2023/015663
(87) International publication number: WO 2025/070858

(57) **Abstract**

The present invention provides a waste sorting using air direction control, comprising an image collection unit that collects waste images of waste moving on a conveyor belt; a target object determination unit that determines whether the waste image is the target object to be sorted using an artificial intelligence model; a robot arm that sorts the target object; an apparatus of air redirection that changes the air direction so that the robot arm adsorbs the target object using air suction force or releases the target object using air discharge force; and a robot arm designation unit that designates a robot arm to sort the target object.

## Description

### Technical Field

The embodiments of the present invention relate to a waste sorting system through air direction control, and more specifically, to a waste sorting system through air direction control that controls the direction of air delivered to a robot arm that grabs and moves the waste moving on a conveyor belt using air suction force and releases the waste grabbed using air discharge force.

### Background Art

According to the Wastes Management Act, general waste other than industrial waste (specific waste), excluding excrement, is considered garbage. Herein, industrial waste refers to waste generated as a result of industrial activities, and the general waste refers to garbage, excrement, etc. generated as a result of the daily lives of people (radioactive waste is separately stipulated in the Atomic Energy Act).

Garbage may be classified into several categories based on the size, shape, and nature thereof. There is garbage of large size that is discharged of irregularly, such as discarded home appliances like refrigerators, televisions, and washing machines, discarded furniture like desks and chests of drawers, and discarded cars and bicycles, while there is also garbage that is discharged of regularly, such as discarded paper and food leftovers. Garbage may also be classified into non-combustible garbage and combustible garbage, and may also be divided into garbage that produces harmful gases when incinerated or hazardous garbage that pollutes the soil or water. It is recommended that combustible garbage be incinerated, non-combustible garbage and garbage that produces harmful gases be landfilled, and hazardous garbage containing heavy metals, such as mercury batteries or fluorescent lamps, be recycled or safely landfilled.

Generally, garbage produces a bad smell and is a breeding ground for rats, flies, etc., which worsens the living environment and is also harmful to public health. In addition, garbage causes inconvenience to people by taking up valuable living space, spoils the appearance of environments, and causes a disagreeable sensation. Garbage damages the environment, and thus needs to be discharged of through a series of processes, including collection in a container, transportation, intermediate treatment, and final treatment.

The amount of waste plastic generated in Korea is increasing steadily. Since the "Extended Producer Responsibility (EPR)" was expanded and implemented in 2003, the issue of recycling waste plastics, which has been increasing, has become an urgent issue. In order to recycle waste plastics, the most important thing is to separate and sort only the necessary waste plastics from mixed garbage. As the scope of recycling expanded to include plastic packaging materials and films, the sorting of these items is emerging as a major issue.

### Technical Problem

The technical problem underlying the present invention is to provide a waste sorting system through air direction control, comprising: a robot arm that grabs and moves waste moving on a conveyor belt using air suction force and releases the caught waste using air discharge force, and an apparatus for air redirection that may efficiently change the air direction to control the air suction force and discharge force.

In addition, another technical problem underlying the present invention is to provide a waste sorting system through air direction control that determines whether a target object to be sorted is the target object to be sorted based on a multi-class criteria table that is easy for a user to designate and to upgrade, using an artificial intelligence model.

The problem underlying the present invention is not limited to the problem(s) mentioned above, and other problem(s) that are not mentioned may be clearly understood by persons having ordinary skill in the art from the description below.

### Technical Solution

A waste sorting system through air direction control according to an embodiment of the present invention comprises: an image collection unit that collects the image of the waste moving on a conveyor belt; a target object determination unit that determines whether the above waste image is the target object to be sorted using an artificial intelligence model; a robot arm that sorts the target object; an apparatus for air redirection that changes the air direction so that the robot arm adsorbs the target object using air suction force or releases the target object using air discharge force; a robot arm designation unit that designates the robot arm to sort the target object.

Target object determination unit may determine whether the target object is the target object using an artificial intelligence model based on waste sorting criteria table.

Artificial intelligence model may be trained using the waste image labeled according to a preset waste sorting criteria table as training data.

Waste sorting criteria table is classified into multiple classes, and Class 1 of the multiple classes is a category according to the material composition of the waste, Class 2 is a category according to the condition (whether damaged) of the waste, Class 3 is a category according to the use of the waste, Class 4 is a category based on the color of the waste, and Class 5 may include the waste not included in Class 1 to Class 4. The target object determination unit may determine whether the object is the target object according to the class of the waste sorting criteria selected by the user.

The robot arm may include an intake/exhaust nozzle connected to the air direction conversion device and a gripper that adsorbs the target object using air suction force and moves it.

The apparatus for air redirection may include a driving control unit that controls the gripping operation of the gripper through air suction force or air discharge force by driving so that the air direction may be converted to intake or exhaust; an intake/exhaust pipe unit arranged to be connected between the driving control unit and the intake/exhaust nozzle; and a branch control unit arranged to be connected between each pipe of the intake/exhaust pipe unit and supplies or blocks air according to the opening/closing control of each pipe.

The driving control unit may control the gripper to grab and move the waste using air suction force or to release the waste using air discharge force. The driving control unit is driven by either a blower method or an air compression method, and may be configured as a ring blower when driven by the blower method, and may be configured as an air compressor when driven by the air compression method.

The driving control unit may adjust the air intake force and the air exhaust force according to the target object.

The intake/exhaust pipe unit may include an intake-only pipe that serves as a passage through which air sucked through the intake port of the gripper is introduced via the intake/exhaust nozzle and then discharged through the exhaust port in the driving control unit; an exhaust-only pipe that serves as a passage through which air sucked through the exhaust port is introduced via the intake/exhaust nozzle and then discharged through the intake port of the gripper; and an intake-exhaust pipe that serves as a passage through which air sucked or exhausted flows according to the valve opening and closing control of the branch control unit.

The branch control unit may include first valve having one side of which is connected to the intake and exhaust pipe and the other side connected to the intake-only pipe; second valve having one side of which is connected to the intake-only pipe and the other side is connected to the air filter; third valve having one side of which is connected to the exhaust-only pipe and the other side is connected to the air filter; and fourth valve having one side of which is connected to the intake-exhaust pipe and the other side is connected to the exhaust-only pipe.

The branch control unit may control the direction of all valves provided inside first valve to fourth valve horizontally when the air direction is switched to intake by the driving control unit, and may control the direction of all valves provided inside first valve to fourth valve vertically when the air direction is switched to exhaust by the driving control unit.

When multiple robots are used, the robot arm designation unit may match the target object and the robot arm with each other by considering the type and the number of the class selected by the user and the number of the robot arms.

Robot arm designation unit may change the matching of the target object and the robot arm when the target object sorting failure rate according to the matching of the target object and the robot arm is below a preset standard. Specific details of other embodiments are included in the detailed description and the attached drawings

### Advantageous Effects

According to one embodiment of the present invention, the present invention enables efficient changing of the direction of air for controlling air intake force and air exhaust force in a robot arm gripping and moving waste moving on a conveyor belt using the air intake force and releases the gripped waste using the air exhaust force.

According to one embodiment of the present invention, the present invention enables designate target objects that each robot can sort in order to have the optimal sorting efficiency by considering the number of target objects and robots that the user wants to sort.

### BRIEF DESCRIPTION OF THE DRAWINGS

FIG. 1 is a schematic drawing of a waste sorting system using air direction control according to one embodiment of the present invention.
FIG. 2 is a schematic diagram of a waste sorting system using air direction control according to one embodiment of the present invention.
FIG. 3 is a diagram illustrating a multi-class criteria table according to one embodiment of the present invention.
FIG. 4 is a diagram that explains how a user selects the target object using a multi-class criteria table according to one embodiment of the present invention.
FIG. 5 is a block diagram illustrating an apparatus for air redirection according to one embodiment of the present invention.
FIG. 6 is a schematic diagram of a robot arm that comprises an intake/exhaust nozzle and a gripper according to one embodiment of the present invention.
FIGS. 7 and 8 are usage state diagrams of an apparatus for air redirection according to an embodiment of the present invention.
FIG. 9 is a schematic diagram of a waste sorting system using air direction control applied with multiple robot arms according to one embodiment of the present invention.

### DETAILED DESCRIPTION

With respect to the embodiments of the present invention described herein, specific structural and functional descriptions are merely exemplified for the purpose of explaining the embodiments of the present invention, and the embodiments of the present invention may be implemented in various forms and should not be construed as being limited to the embodiments described herein.

The present invention may be variously modified and have various types, and specific embodiments thereof will be illustrated in the drawings and described in detail in the detailed description. However, this is not intended to limit the present invention to specific embodiments, and it should be understood that all modifications, equivalents and substitutes included in the spirit and technical scope of the present invention are included.

Terms such as "first" and "second" may be used to describe various components, but the components are not restricted by the terms. The terms are used only to distinguish one component from another component. For example, a first component may be named a second component without departing from the scope of right of the present invention. Likewise, a second component may be named a first component.

It will be understood that when a component is referred to as being "connected" or "coupled" to another component, the two components may be directly connected or coupled to each other, or intervening components may be present between the two components. It will be understood that when a component is referred to as being "directly connected or coupled", no intervening components are present between the two components. Other expressions describing relationships between components such as "between", "immediately between" or "adjacent to" and "directly adjacent to" may be construed similarly.

The terms used in the present specification are merely used to describe specific embodiments and are not intended to limit the present invention. A singular expression includes a plural expression, unless the context clearly states otherwise. In the present specification, it should be understood that the terms such as "include" or "have" are merely intended to indicate that features, numbers, steps, operations, components, parts, or combinations thereof are present, and are not intended to exclude the possibility that one or more other features, numbers, steps, operations, components, parts, or combinations thereof will be present or added.

As used herein, the term "waste" includes plastics, PET bottles, glass bottles, glass, paper, Styrofoam, general waste, and industrial waste. As used herein, the term "waste" includes plastics, PET bottles, glass bottles, glass, paper, Styrofoam, general waste, and industrial waste.

As used herein the target object means the object to be sorted among various types of objects such as waste.

Unless otherwise defined, all terms including technical and scientific terms used herein have the same meaning as commonly understood by those skilled in the technical field to which the present invention pertains. It will be understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, preferred embodiments of the present invention will be described in detail with reference to the accompanying drawings. In describing the present invention, in order to facilitate the overall understanding, the same reference numerals are used to designate the same components throughout the drawings, and repeated descriptions of the same components will be omitted.

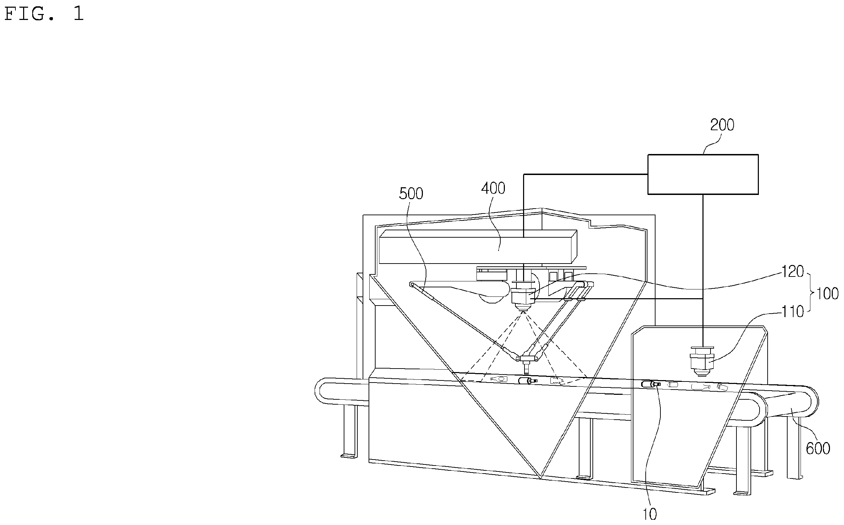

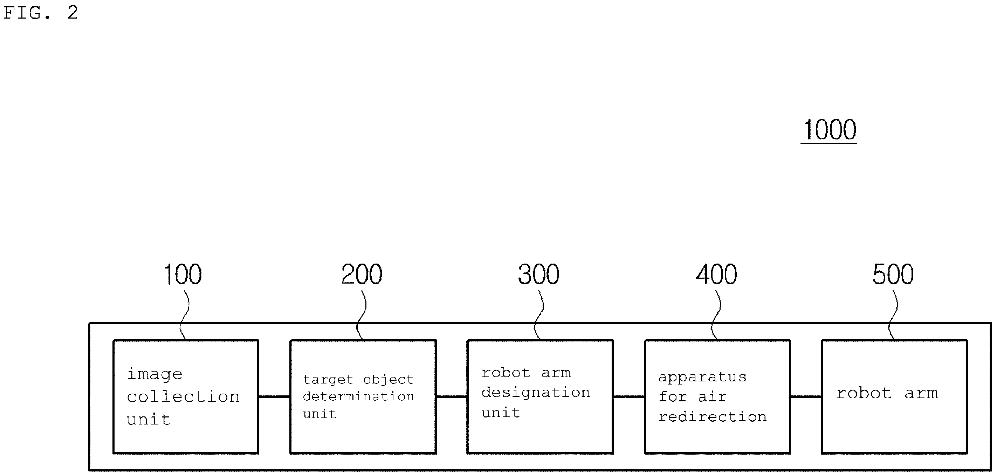

FIG. 1 is a block diagram illustrating a waste sorting system using air direction control according to an embodiment of the present invention. FIG. 2 is usage state diagrams of a waste sorting system using air direction control according to an embodiment of the present invention.

Referring to FIGS. 1 and 2, a waste sorting system 1000 using air direction control according to an embodiment of the present invention collects the object 10, such as the waste moving on a conveyor belt 600, through the image collection unit 100, selects the target object to be sorted through the target object determination unit 200, and then sorts the target object through the robot arm 500. In addition, the waste sorting system 1000 using air direction control according to one embodiment of the present invention includes the robot arm designation unit 300 that designates the robot arm 500 to sort the target object, and the apparatus 400 for air redirection that changes the air direction so that the robot arm 500 may adsorb and release the target object.

The image collection unit 100 may collect the image of the object 10 and then preprocess the image data.

In addition to a vision camera, various sensors may be used as equipment for collecting the waste image used in the image collection unit 100. For example, an optical sensor, an infrared sensor, an ultrasonic sensor, a metal detector, an x-ray sensor, a radar sensor, etc. may be used.

The image collection unit 100 may be installed in various locations according to the embodiments of the present invention. For example, Vision Camera 1 110 installed at the beginning of the movement of waste on a conveyor belt 600 and Vision Camera 2 120 installed in conjunction with the robot arm 500 may be installed.

According to an embodiments, the waste sorting system 1000 using air direction control according to embodiments of the present invention may select the target object through the information of the object 10 collected through Vision Camera 1 110 and designate the target object to be sorted by the robot arm 500 to which Vision Camera 2 120 is installed through the information of the object 10 collected through Vision Camera 2 120.

The robot arm 500 according to embodiments of the present invention is intended to sort the object moving on a conveyor belt, and a suction-type robot arm (Suction Robot arms) may be used.

The target object determination unit 200 may determine whether the waste image obtained through an image collection unit 100 is the target object to be sorted using an artificial intelligence model. For the artificial intelligence model used to determine whether it is the target object, deep learning or neural network may be used. The neural network model may include various types of models such as CNN (Convolution Neural Network), R-CNN (Region with Convolution Neural Network), RPN (Region Proposal Network), RNN (Recurrent Neural Network), S-DNN (Stacking-based deep Neural Network), S-SDNN (State-Space Dynamic Neural Network), Deconvolution Network, DBN (Deep Belief Network), RBM (Restrcted Boltzman Machine), Fully Convolutional Network, LSTM (Long Short-Term Memory) Network, Classification Network, etc., but are not limited to these.

The target object determination unit 200 may determine whether the target object is based on the waste sorting criteria table using an artificial intelligence model.

The target object determination unit 200 may use an artificial intelligence model trained using the waste images labeled according to a preset waste sorting criteria table as training data.

The waste sorting criteria table according to one embodiment of the present invention may include multiple classes each having a sorting criterion.

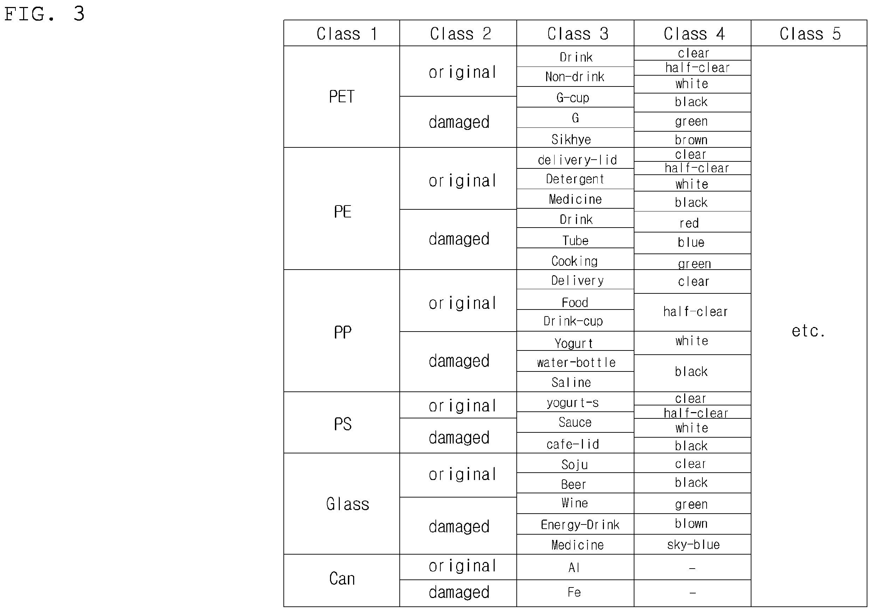

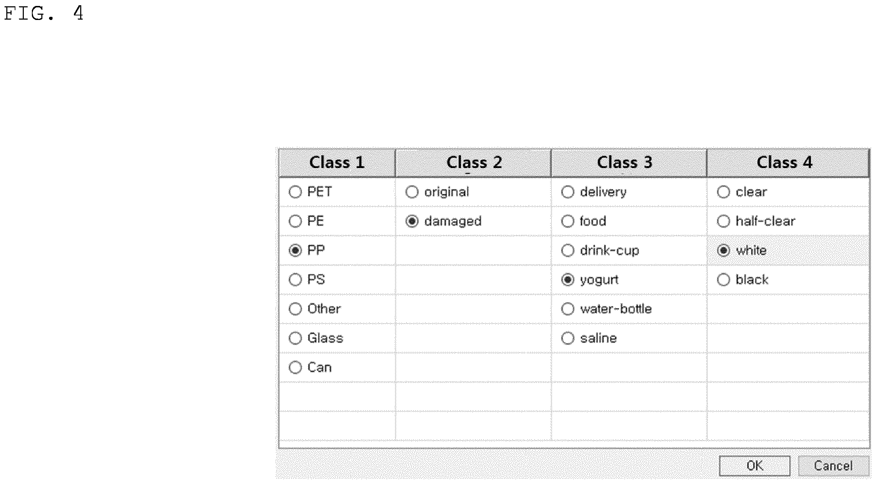

FIG. 3 is a diagram that explains a multi-class criteria table according to one embodiment of the present invention, and FIG. 4 is a diagram that explains how a user selects a target object using a multi-class criteria table according to one embodiment of the present invention.

Referring to FIG. 3, Class 1 of the multiple classes is a category according to the material composition of the waste, Class 2 is a category according to the condition (whether damaged) of the waste, Class 3 is a category according to the use of the waste, and Class 4 may be a category based on the color of the waste. Class 5 may be a category that includes waste that is not included in Class 1 to Class 4 at all.

Referring to FIG. 4, the target object determination unit 200 may determine whether the target object is selected based on the class of the waste sorting criteria selected by the user.

The user may freely select Class 1, Class 2, Class 3, or Class 4.

For example, the user may select PP, damaged, yogurt, or white; and the target object determination unit 200 may determine the target object using artificial intelligence based on the multi-class sorting criteria selected by the user among the images of waste moving on the conveyor belt.

The user may not only generate multiple multi-class sorting criteria, but also generate various class combinations. For example, the user may generate the multi-class sorting criteria {(PP, damaged, yogurt, white), (PET, none, none, black)}. Here, "none" means that no items of the corresponding class are selected, which means that the sorting criteria of the corresponding class are not subject to consideration. The target object determination unit 200 may add new sorting attributes to the waste sorting criteria table.

The target object determination unit 200 may derive new sorting attributes from the waste images classified into Class 5 using an artificial intelligence model or may upgrade the waste sorting criteria table using the new sorting attributes input by the user.

In the past, in order to upgrade the waste sorting criteria table, the user had to individually specify the type and condition of waste that was not included in the existing waste sorting criteria table. However, the present invention may automatically derive new sorting attributes and upgrade them through an artificial intelligence model using the waste images classified into Class 5.

The artificial intelligence model used at this time may analyze waste images classified into Class 5 to derive sorting attributes corresponding to the new class.

For example, features may be extracted from waste images classified into Class 5 through a convolutional neural network (CNN), and then new sorting attributes that may classify images may be derived based on these features.

Here, the new sorting attributes may be new items of the existing class or may be a criterion for designating a new class. Target object determination unit (200) may automatically label the new sorting attributes added to the waste image classified into Class 5, and retrain the artificial intelligence model using the labeled waste images as training data to improve the performance of the target object determination unit.

The apparatus 400 for air redirection may change the air direction so that the robot arm may adsorb the target object using air suction force or release the target object using air discharge force.

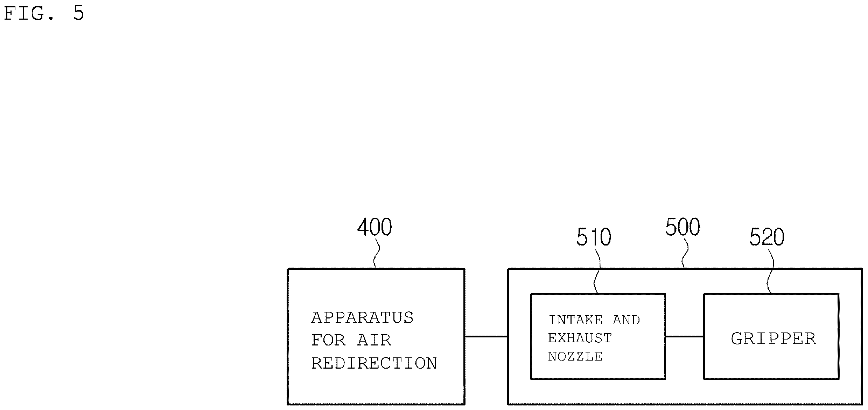

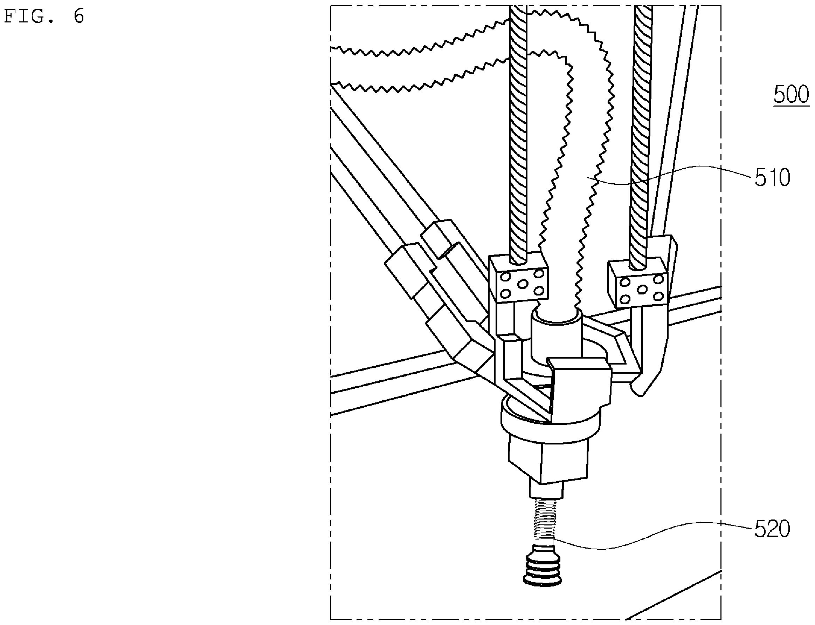

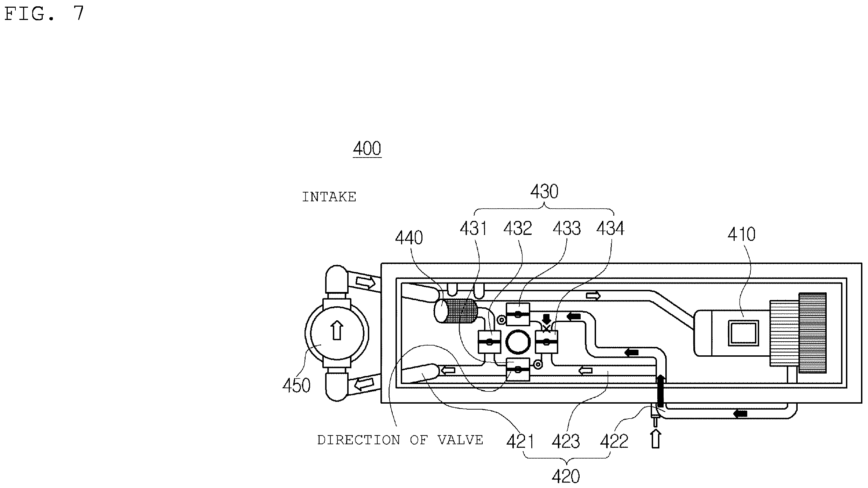

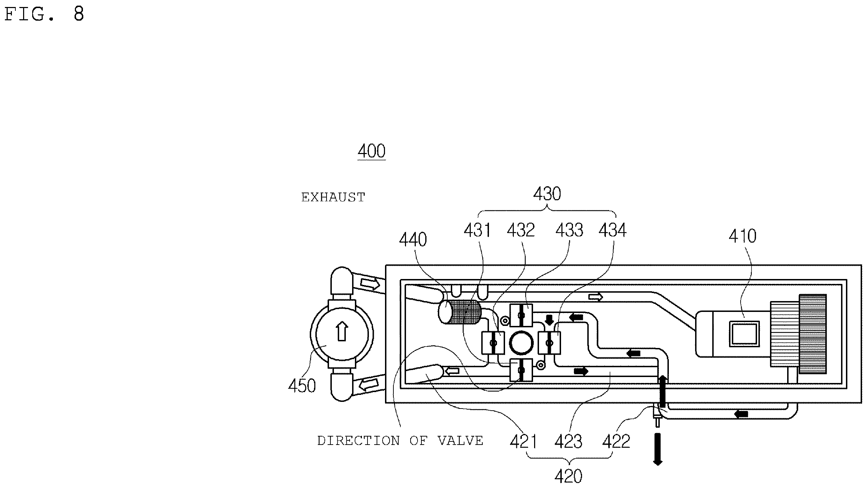

FIG. 5 is a block diagram illustrating an apparatus for air redirection according to an embodiment of the present invention. FIG. 6 is a schematic diagram illustrating a robot arm including an intake/exhaust nozzle and a gripper according to one embodiment of the present invention. FIGS. 7 and 8 are usage state diagrams of an apparatus for air redirection according to an embodiment of the present invention.

Referring to FIGS. 5 to 8, an apparatus 400 for air redirection according to an embodiment of the present invention may be installed to be connected through a robot arm 500, a gripper 520, and an intake and exhaust nozzle 510.

The robot arm 500 may grip and move waste (waste plastic, cans, etc.) moving on a conveyor belt. The robot arm 500 may catch waste by using air intake force and may use air exhaust force when releasing the waste.

To this end, the apparatus 400 for air redirection may be configured to include a driving control unit 410, an intake and exhaust pipe unit 420, and a branch control unit 430.

The driving control unit 410 may control the gripping operation of the gripper 520 through air intake force or air exhaust force by driving to change the direction of air to intake or exhaust.

The driving control unit 410 may control the gripper 520 to grip and move the waste through air intake force or to release the waste through air exhaust force.

The driving control unit 410 may be driven by a pneumatic generation device.

For example, the driving control unit 410 may be driven by either a blower method or an air compression method.

When driven in the blower manner, the driving control unit 410 may be configured as a ring blower. The ring blower is a mechanical device widely used in industrial sites and machines requiring pressurized air, and is a fluid machine that may produce a large head with a small flow rate.

Meanwhile, when driven by the air compression method, the driving control unit 410 may be configured as an air compressor. The air compressor is a pneumatic device that converts electric power (such as an electric motor, or a diesel or gasoline engine) into potential energy stored in compressed air.

For reference, in an embodiment of the present invention, the driving control unit 410 may be implemented as a blow-type ring blower. However, it is not limited thereto and the driving control unit 410 may be implemented with an air compression-type air compressor.

Although the above description has described the blower method or air compression method as the pneumatic generation device, this is merely an example among several embodiments of the present invention. In other embodiments of the present invention, a flammable gas compressor, a piston type air brush, a gasoline compressor, etc. may be applied.

The intake and exhaust pipe unit 420 may be disposed to be connected between the driving control unit 410 and the intake and exhaust nozzle 510. The intake and exhaust pipe unit 420 may be configured to include an intake-only pipe 421, an exhaust-only pipe 422, and a common intake and exhaust pipe 423.

That is, the intake and exhaust pipe unit 420 may be disposed so that one side of the intake-only pipe 421 is connected to the driving control unit 410, and the other side of the intake-only pipe 421 is connected to the common intake and exhaust pipe 423, more specifically, to a first valve 431 and a second valve 432 described below.

In addition, the intake and exhaust pipe unit 420 may be disposed so that one side of the exhaust-only pipe 422 is connected to the driving control unit 410, and the other side of the exhaust-only pipe 422 is connected to the common intake and exhaust pipe 423, more specifically, to a third valve 433 and a fourth valve 434 described below.

In addition, the intake and exhaust pipe unit 420 may be disposed so that one side of the common intake and exhaust pipe 423 is connected to the intake and exhaust nozzle 510, and the other side of the common intake and exhaust pipe 423 is connected to the intake-only pipe 421 and the exhaust-only pipe 422 through the first to fourth valves 431, 432, 433, 434.

The intake and exhaust pipe unit 420 disposed as described above may perform the function of intake air through the intake-only pipe 421.

That is, the aforementioned intake-only pipe 421 may serve as a passage through which air intaken in through an intake port of the gripper 520 flows in through the intake and exhaust nozzle 510 and then is discharged through an exhaust port provided in the driving control unit 410.

In addition, the intake and exhaust pipe unit 420 disposed as described above may perform the function of discharging air through the exhaust-only pipe 422.

That is, the exhaust-only pipe 422 may serve as a passage through which air intaken in through the exhaust port provided in the driving control unit 410 flows in and then is discharged through the intake port of the gripper 520 via the intake and exhaust nozzle 510.

In addition, the intake and exhaust pipe unit 420 disposed as described above may perform the function of selectively intake or exhaust air through the common intake and exhaust pipe 423.

That is, the common intake and exhaust pipe 423 may serve as a passage through which intake or exhaust air flows according to the valve opening and closing control of the branch control unit 430.

The branch control unit 430 is disposed to be connected between each pipe 421, 422, 423 of the intake and exhaust pipe unit 420, and may perform the function of supplying or blocking air according to the opening and closing control of each pipe 421, 422, 423.

To this end, the branch control unit 430 may be configured to include the first valve 431, the second valve 432, the third valve 433, and the fourth valve 434.

The first valve 431 may be disposed so that one side is connected to the common intake and exhaust pipe 423 and the other side is connected to the intake-only pipe 421.

The second valve 432 may be disposed so that one side is connected to the intake-only pipe 421 and the other side is connected to an air filter 240.

The third valve 433 may be disposed so that one side is connected to the exhaust-only pipe 422 and the other side is connected to the air filter 240.

The fourth valve 434 may be disposed so that one side is connected to the common intake and exhaust pipe 423 and the other side is connected to the exhaust-only pipe 422.

The branch control unit 430 disposed as described above may horizontally control the direction of all valves provided inside the first to fourth valves 431, 432, 433, 434 when the direction of air is changed to be intaken by the driving control unit 410.

On the other hand, when the direction of air is changed to exhaust by the driving control unit 410, the branch control unit 430 may vertically control the direction of all the valves provided inside the first to fourth valves 431, 432, 433, 434.

The apparatus 400 for air redirection according to an embodiment of the present invention may be configured to additionally include a ring blower intake air filter 450 in the middle of the intake-only pipe 421 of the intake and exhaust pipe unit 420. The ring blower intake air filter 450 is a filter device for filtering out foreign substances, etc. in the air intaken in by a blower.

Hereinafter, the operation process according to intake and exhaust of the apparatus for air redirection according to an embodiment of the present invention will be described with reference to FIGS. 7 and 8.

The operation process according to intake is explained with reference to FIG. 7 as follows.

First, when an intake command is transmitted to the ring blower and the branch control unit 430, which is an example of the driving control unit 410, the ring blower rotates an impeller located inside casing at high speed to intake external air.

Simultaneously, the first to fourth valves 431, 432, 433, 434 of the branch control unit 430 may all change the direction of the valves to the horizontal direction through valve control.

Accordingly, air intaken in from the outside, that is, air intaken in through the gripper 520 and the intake and exhaust nozzle 510, flows in through the intake and exhaust pipe 420 as a passage. In this process, air intake force is generated, so that waste moving on a conveyor belt may be gripped and moved through the gripper 520.

Meanwhile, referring to Fig. 8, the operation process according to exhaust is explained as follows.

First, when an exhaust command is transmitted to the ring blower and the branch control unit 430, which is an example of the driving control unit 410, the ring blower generates friction of the fluid as the impeller grooves dug radially along the circumference of the impeller located inside the casing rotate inside the casing, and the resulting pressure change increases the head to discharge (exhaust) air to the outside.

Simultaneously, the first to fourth valves 431, 432, 433, 434 of the branch control unit 430 may all change the direction of the valves to the vertical direction through valve control.

Accordingly, the air discharged from the ring blower is discharged through the intake and exhaust nozzle 510 and the gripper 520 through the intake and exhaust pipe 420 as a passage. In this process, air exhaust force is generated to release the operation of the gripper 520, so that the waste gripped by the gripper 510 may be placed at a target point.

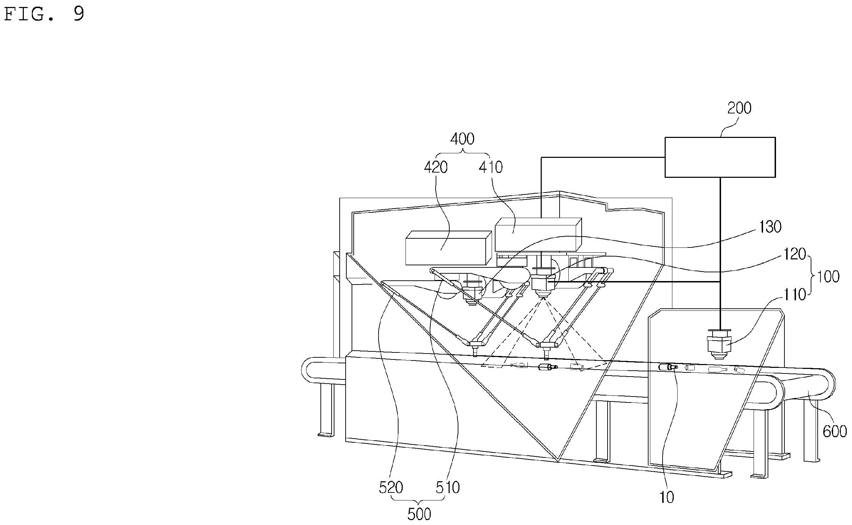

FIG. 9 is a schematic diagram of a waste sorting system using air direction control applied with multiple robot arms according to one embodiment of the present invention.

The robot arm designation unit 300 may designate a robot arm to sort a target object by using a multi-class waste sorting criteria table.

When multiple robot arms are used, the robot arm designation unit 300 may match the target object and the robot arm by considering the type and number of classes selected by the user and the number of robot arms.

For example, the user may generate target objects {e.g., (PP, damaged, yogurt, white), (PET, none, none, black)}, (PE, damaged, Drink, black)}, (Glass, original, soju, clear)}, (PET, original, Drink, clear)}, (PS, original, Sauce, white)} using the multi-class sorting criteria.

Referring to FIG. 9, the robot arm designation unit 300 may match the robot arm to sort each target object by considering the class type and number of classes and the number of robots among the target objects selected by the user. For example, it may designate Robot arm 1 510 to sort PET (none, none, black), PET (original, drink, clear)} and designate Robot arm 2 520 to sort PP (damaged, yogurt, white), PE (damaged, drink, black), Glass (original, soju, clear), PS (original, sauce, white)} based on Class 1.

The robot arm designation unit 300 may change the matching of the target object and the robot arm when the target object sorting failure rate according to the matching of the target object and the robot arm is below a preset standard.

For example, based on Class 1 described above, it matches PET (none, none, black), PET (original, drink, clear) with Robot arm 1 510, and matches PP (damaged, yogurt, white), PE (damaged, drink, black), Glass (original, soju, clear), PS (original, sauce, white)} with Robot arm 2 520, and then if the target object sorting failure rate is lower than the preset standard, the matching may be switched to Class 2 as the standard. In another embodiment, if there are 6 target objects are selected by the user for sorting and 2 robots, the user may match each robot with 3 target objects each for sorting.

In this way, the target object sorting system using the multi-class sorting criteria table according to the present invention enables designate target objects that each robot can sort in order to have the optimal sorting efficiency by considering the number of target objects and robots that the user wants to sort.

The system or apparatus described above may be implemented as hardware components, or a combination of hardware components and software components. For example, the system or devices described above (e.g., a processor, a controller, an arithmetic logic part (ALU), a digital signal processor, a microcomputer, a field programmable gate array (FPGA), a programmable logic part (PLU), a microprocessor, or any other device capable of executing instructions and responding to them) may be implemented using one or more general-purpose computers or special-purpose computers. The processing device may execute an operating system (OS) and one or more software applications running on the operating system. In addition, the processing device may access, store, manipulate, process, and generate data in response to the execution of the software. For ease of understanding, the processing device is sometimes described as being used alone, but persons having ordinary skill in the art will appreciate that the processing device may include multiple processing elements and/or multiple types of processing elements. For example, the processing device may include multiple processors, or one processor and one controller. Also, other processing configurations, such as parallel processors, are possible.

The software may include a computer program, code, instructions, or a combination of one or more of these, and may configure a processing device to operate as desired or command the processing device, either independently or collectively. The software and/or data may be embodied in any type of machine, component, physical device, virtual equipment, computer storage medium, or device, for being construed by the processing device or for providing instructions or data to the processing device. The software may be distributed over networked computer systems and stored or executed in a distributed manner. The software and data may be stored on one or more computer-readable recording media.

The method according to the embodiments of present invention may be implemented in the form of program instructions that may be executed by various computer means and recorded on a computer-readable medium. The computer-readable medium may include program instructions, data files, data structures, etc., alone or in combination. The medium may be a computer-executable program that is continuously stored or temporarily stored for execution or download. In addition, the medium may be a variety of recording means or storage means in the form of a single or multiple hardware combination, and it is not limited to a medium directly connected to a computer system, and may also be distributed over the network. For example, the medium may include magnetic media (e.g., hard disks, floppy disks, and magnetic tapes), optical recording media (e.g., CD-ROMs and DVDs), magneto-optical media (e.g., floptical disks), ROMs, RAMs, and flash memories, etc., configured to store program instructions. In addition, for examples of other media, the media may include recording media or storage media managed by app stores that distribute applications or other sites, servers, etc. that supply or distribute various software. Examples of program instructions include not only machine language codes generated by a compiler, but also high-level language codes that may be executed by a computer using an interpreter, etc.

Although the embodiments have been described based on the limited embodiments and drawings as described above, those skilled in the pertinent technical field may apply various technical modifications and variations from the foregoing descriptions. For example, even when the described technologies are performed in a different order from that in the described method, and/or the described components such as a system, structure, device, and circuit are coupled or combined in a manner different from that as described above, or are replaced or substituted with other components or equivalents, appropriate results may be achieved.

Therefore, other implementations, other embodiments, and equivalents to claims also fall within the scope of the following claims.

## Claims

1. A waste sorting system using air direction control, comprising:
an image collection unit for collecting waste images of the waste moving on a conveyor belt;
a target object determination unit for determining whether the waste image is a target object to be sorted using an artificial intelligence model;
a robot arm for sorting the target object;
an apparatus for air redirection for changing the air direction so that the robot arm adsorbs the target object using air suction force or releases the target object using air discharge force; and
a robot arm designation unit for designating a robot arm to sort the target object.

2. The system of claim 1, wherein the target object determination unit determines whether the object is the target object using an artificial intelligence model based on the waste sorting criteria table.

3. The system of claim 2, wherein the artificial intelligence model is trained using the waste images labeled according to a preset waste sorting criteria table as training data.

4. The system of claim 2, wherein the waste sorting criteria table is classified into multiple classes, and Class 1 of the multiple classes is a category according to the material composition of the waste, Class 2 is a category according to the condition (whether damaged) of the waste, Class 3 is a category according to the usage of the waste, Class 4 is a category based on the color of the waste, and Class 5 includes the wastes not included in Class 1 to Class 4.

5. The system of claim 4, wherein the target object determination unit determines whether the object is the target object according to the class of the waste sorting criteria table selected by the user.

6. The system of claim 1, wherein the robot arm comprises an intake/exhaust nozzle connected to the apparatus for air redirection that adsorbs and moves the target object using air suction force.

7. The system of claim 6, wherein the apparatus for air redirection comprises:
a driving control unit controlling a gripping operation of the gripper using the air intake force or air exhaust force by driving so that a direction of air is able to be changed to intake or exhaust;
an intake and exhaust pipe unit disposed to be connected between the driving control unit and the intake and exhaust nozzle; and
a branch control unit disposed to be connected between each of pipes of the intake and exhaust pipe unit to supply or block air according to opening and closing control of each of the pipes.

8. The system of claim 7, wherein the driving control unit controls the gripper to grip and move the waste through the air intake force or to release the waste through the air exhaust force.

9. The system of claim 7,
wherein the driving control unit is driven by either a blower method or an air compression method; and
when driven by the blower method, the driving control unit is configured as a ring blower, and when driven by the air compression method, the driving control unit is configured as an air compressor

10. The system of claim 7, wherein the driving control unit adjusts air intake force and air exhaust force according to the target object.

11. The system of claim 7, wherein the intake and exhaust pipe unit comprises:
an intake-only pipe that serves as a passage through which air intaken in through an intake port of the gripper flows in through the intake and exhaust nozzle and then is discharged through an exhaust port provided in the driving control unit;
an exhaust-only pipe that serves as a passage through which air intaken in through the exhaust port flows in and then is discharged through the intake port of the gripper via the intake and exhaust nozzle; and
a common intake and exhaust pipe that serves as a passage through which air intaken in or exhausted flows according to valve opening and closing control of the branch control unit.

12. The system of claim 11, wherein the branch control unit comprises:
a first valve having one side connected to the common intake and exhaust pipe and the other side connected to the intake-only pipe;
a second valve having one side connected to the intake-only pipe and the other side connected to an air filter;
a third valve having one side connected to the exhaust-only pipe and the other side connected to the air filter; and a fourth valve having one side connected to the common intake and exhaust pipe and the other side connected to the exhaust-only pipe.

13. The system of claim 12, wherein the branch control unit controls a directions of all valves provided inside the first to fourth valves horizontally when the direction of air is changed to be intaken by the driving control unit, and controls the direction of all valves provided inside the first to fourth valves vertically when the direction of air is changed to exhaust by the driving control unit.

14. The system of claim 1, when multiple robots are used, the robot arm designation unit matches the target object and the robot arm with each other by considering the type and number of the classes selected by the user and the number of the robot arms.

15. The system of claim 14, wherein the robot arm designation unit changes the matching between the target object and the robot arm when the target object sorting failure rate according to the matching between the target object and the robot arm is below a preset standard.
